# EUROPÄISCHE PATENTANMELDUNG

(11) **EP 4 818 620 A1**
(43) Veröffentlichungstag der Anmeldung: **07.10.2026**
(21) Anmeldenummer: 26166720.8
(22) Anmeldetag: 23.03.2026
(51) Int. Cl.: F28D 20/00

(54) **SPEICHERVORRICHTUNG ZUR THERMOCHEMISCHEN SPEICHERUNG VON ENERGIE SOWIE VERFAHREN ZUR THERMOCHEMISCHEN SPEICHERUNG VON ENERGIE**

(30) Priorität: 02.04.2025 DE 102025112841
(71) Anmelder: Deutsches Zentrum für Luft- und Raumfahrt e.V., 53227 Bonn (DE)
(72) Erfinder: Kühl, Viktor, 51147 Köln (DE); Linder, Marc, 70569 Stuttgart (DE); Schmidt, Matthias, 50825 Köln (DE); Sourmelis Terzopoulos, Venizelos Eleftherios, 51147 Köln (DE); Weigl, Andreas, 51147 Köln (DE)
(74) Vertreter: dompatent

(57) **Zusammenfassung**

Speichervorrichtung (1) zur thermochemischen Speicherung von Energie, mit einer Reaktorvorrichtung (10), mit einem Reaktorbehälter (12) mit einem Behälterraum (14) zur Aufnahme eines wirbelfähigen, partikelförmigen Feststoffes (100), mit einer Heizvorrichtung (20) zur Zufuhr von Wärmeenergie zu dem partikelförmigen Feststoff (100) während einer Speicherbeladung, wobei der partikelförmige Feststoff (100) während der Speicherbeladung in einer endothermen Reaktion unter Zufuhr von Wärmeenergie von einem ersten Zustand unter Abgabe eines Reaktionsmittels in einen zweiten Zustand überführbar ist, mit einer Wärmeübertragungsvorrichtung (18) zur Wärmeübertragung während einer Speicherentladung, wobei der partikelförmige Feststoff (100) während der Speicherentladung in einer exothermen Reaktion unter Abgabe von Wärmeenergie von dem zweiten Zustand unter Aufnahme des Reaktionsmittels in den ersten Zustand rücküberführbar ist, und mit einer Mischeinrichtung (24) zur Verwirbelung des partikelförmigen Feststoffes (100), ferner mit einem Dampfbehälter (28) zur Speicherung oder Bereitstellung von Reaktionsmittel im dampfförmigen Zustand und einer Zuführvorrichtung (32) zur Zuführung des dampfförmigen Reaktionsmittels in den Behälterraum (14), die den Dampfbehälter (28) mit dem Reaktorbehälter (12) verbindet.

## Beschreibung

Die vorliegende Erfindung betrifft eine Speichervorrichtung zur thermochemischen Speicherung von Energie sowie ein Verfahren zur thermochemischen Speicherung von Energie.

Thermochemische Speicher (TCS) sind Energiespeichertechnologien, die sich insbesondere für die Langzeitspeicherung von Energie eignen. Als Speichermaterial wird zumeist ein Feststoff mit thermochemischen Eigenschaften verwendet. Zur Be- und Entladung des Feststoffes wird eine Reaktorvorrichtung verwendet, in deren Reaktorbehälter eine Reaktion zwischen einem Feststoff und einem Reaktionsmittel abläuft. Durch Zuführen von Wärmeenergie wird der Feststoff erwärmt und von einem ersten Zustand unter Abgabe des Reaktionsmittels in einen zweiten Zustand überführt. Das Reaktionsfluid ist dabei zumeist dampfförmig. Während der Überführung in den zweiten Zustand wird das Reaktionsmittel aus dem Reaktionsraum entfernt. Für die Entladung wird dem Feststoff Reaktionsmittel in flüssiger Form zugeführt. Der Feststoff nimmt das Reaktionsfluid auf, gibt Wärmeenergie ab und ist in den ersten Zustand rücküberführbar.

Die Zugabe des Reaktionsmittels erfolgt zumeist mit Hilfe einer Einspritzdüse. Der Temperaturbereich der vorbekannten thermochemischen Speicher ist dabei durch die Siedetemperatur des Reaktionsmittels begrenzt, da es andernfalls bei einer Verdampfung des Reaktionsmittels zu einem unkontrollierten Druckanstieg im Reaktorbehälter kommen könnte. Um dies auszuschließen, wird die Betriebstemperatur des Reaktor entsprechend an die Siedetemperatur des Reaktionsmittels angepasst.

Durch diese Einschränkung wird die Wärmeübertragung bei der Entladung des Speichers limitiert. Zum Erreichen hoher Wärmeübertragungsraten wären hohe Temperaturgradienten notwendig, die jedoch aufgrund der limitierten Temperatur bei der Speicherentladung nicht erreicht werden können.

Zum Erreichen hoher Wärmeübertragungsraten wären somit große Wärmeübertragungsflächen notwendig, wodurch die Baugröße des Speichers und somit Kosten erhöht sind.

Die zuvor beschriebenen thermochemischen Speicher sind allgemeiner Kenntnisstand des Anmelders und beziehen sich nicht notwendigerweise auf einen veröffentlichten Stand der Technik.

Es ist Aufgabe der vorliegenden Erfindung, einen thermochemischen Speicher bereitzustellen, der eine höhere spezifische Wärmeleistung bereitstellt, wobei gleichzeitig große Wärmeübertragungsflächen und somit Baudimensionen vermieden werden.

Es ist ferner Aufgabe der vorliegenden Erfindung, ein entsprechendes Verfahren zum Betrieb eines thermochemischen Speichers bereitzustellen.

Der erfindungsgemäße thermochemische Speicher ist definiert durch die Merkmale des Anspruchs 1.

Das erfindungsgemäße Verfahren ist definiert durch die Merkmale des Anspruchs 10.

Die erfindungsgemäße Speichervorrichtung zur thermochemischen Speicherung von Energie weist eine Reaktorvorrichtung mit einem Reaktorbehälter mit einem Behälterraum zur Aufnahme eines wirbelfähigen, partikelförmigen Feststoffes, mit einer Heizvorrichtung zur Zufuhr von Wärmeenergie zu dem partikelförmigen Feststoff während einer Speicherbeladung, mit einer Wärmeübertragungsvorrichtung zur Wärmeübertragung während einer Speicherentladung, und mit einer Mischeinrichtung zur Verwirbelung des partikelförmigen Feststoffes, auf. Der partikelförmige Feststoff wird während der Speicherbeladung in einer endothermen Reaktion unter Zufuhr von Wärmeenergie von einem ersten Zustand unter Abgabe eines Reaktionsmittels in einen zweiten Zustand überführt. Während der Speicherentladung wird der partikelförmige Feststoff in einer exothermen Reaktion unter Abgabe von Wärmeenergie von dem zweiten Zustand unter Aufnahme des Reaktionsmittels in den ersten Zustand rücküberführt.

Die erfindungsgemäße Speichervorrichtung ist gekennzeichnet durch einen Dampfbehälter zur Speicherung oder Bereitstellung von Reaktionsmittel im dampfenden Zustand und eine Zuführvorrichtung zur Zuführung des dampfförmigen Reaktionsmittels in den Behälterraum, die den Dampfbehälter mit dem Reaktorbehälter verbindet.

Mittels der erfindungsgemäßen Speichervorrichtung ist somit vorgesehen, dass bei der Speicherentladung das Reaktionsmittel in dampfförmigem Zustand zugeführt wird. Da das Reaktionsmittel im dampfförmigen Zustand dem Reaktorbehälter zugeführt wird, besteht während der Speicherentladung und somit während der exothermen Reaktion nicht die Gefahr der Verdampfung von Reaktionsmittel, sodass es nicht zu einem unkontrollierten Druckanstieg im Reaktorbehälter kommen kann. Somit kann die erfindungsgemäße Speichervorrichtung in einem wesentlich größeren Temperaturbereich betrieben werden. Beispielsweise können bei der Speicherentladung Temperaturen im Reaktorbehälter von über 500° C erreicht werden, wodurch ein großer Temperaturgradient an der Wärmeübertragungsvorrichtung während der Speicherentladung möglich ist. Dadurch kann eine hohe spezifische Wärmeleistung der Speichervorrichtung erreicht werden.

Gleichzeitig hat sich herausgestellt, dass die Speichervorrichtung bei vergleichsweise geringem Druck in dem Reaktorbehälter betrieben werden kann. Der Druck in dem Reaktorbehälter bei vorbekannten Speichervorrichtungen, bei denen Reaktionsmittel im flüssigen Zustand zugeführt wird, beträgt zumeist etwa 1 bar. Bei der vorliegenden Erfindung kann bei der Speicherentladung in dem Reaktorbehälter ein deutlich geringerer Druck von beispielsweise bis zu 0,4 bar vorliegen, sodass die konstruktionstechnischen Anforderungen an die Reaktorvorrichtung vergleichsweise gering sind.

Vorzugsweise ist vorgesehen, dass der Dampfbehälter als Druckbehälter ausgebildet ist. Mittels des Dampfbehälters als Druckbehälter kann das dampfförmige Reaktionsmittel in vorteilhafter Weise gespeichert und durch die Zuführvorrichtung in den Reaktorbehälter transportiert werden. Es kann vorgesehen sein, dass die Zuführvorrichtung einen freien Dampftransport in den Reaktorbehälter und aus dem Reaktorbehälter ermöglicht, sodass über den Dampfbehälter als Druckbehälter der Druck in dem Reaktorbehälter regulierbar ist. Insbesondere kann in dem Dampfbehälter ein vergleichsweise geringer Druck vorherrschen, so dass die Speicherung des Reaktionsmittels bei relativ niedriger Temperatur erfolgen kann.

Vorzugsweise ist vorgesehen, dass der Dampfbehälter eine Verdampfungseinrichtung zur Verdampfung des Reaktionsmittels aufweist. Über die Verdampfungseinrichtung kann einerseits das Reaktionsmittel in vorteilhafter Weise im dampfförmigen Zustand bereitgestellt werden und andererseits kann insbesondere bei der Ausgestaltung des Dampfbehälters als Druckbehälter mittels der Verdampfungseinrichtung der Druck in dem Dampfbehälter durch Verdampfung oder Kondensation des Reaktionsmittels reguliert werden. Bei der Ausgestaltung des Dampfbehälters als Druckbehälter kann ferner die Verdampfung des Reaktionsmittels bei relativ niedriger Temperatur erfolgen.

Vorzugsweise ist vorgesehen, dass die Wärmeübertragungsvorrichtung zur Speicherentladung durch eine Wand mit integrierten Kanälen gebildet ist, wobei durch die Kanäle ein Wärmeträgerfluid leitbar ist. Vorzugsweise umgibt die Wand den Behälterraum mantelförmig. Bei der erfindungsgemäßen Speichervorrichtung kann somit vorgesehen sein, dass die Wärmeübertragungsvorrichtung als eine den partikelförmigen Feststoff umgebende Wand ausgeführt ist. Bei der Speicherentladung wird der partikelförmige Feststoff über die Mischeinrichtung verwirbelt und es kann in vorteilhafter Weise eine Wärmeübertragung an die Wand der Wärmeübertragungsvorrichtung erfolgen, wobei das die in der Wand integrierten Kanäle durchströmende Wärmeträgerfluid erwärmt wird.

Die Zuführvorrichtung kann einen Einlass in den Behälterraum des Reaktorbehälter bilden, wobei an dem Einlass eine Filtereinrichtung für den partikelförmigen Feststoff angeordnet ist. Dadurch wird vermieden, dass bei einem Dampftransport aus dem Behälterraum nach außen, beispielsweise in den Dampfbehälter, partikelförmiger Feststoff mitgerissen wird, und somit, dass die Zuführvorrichtung mit partikelförmigem Feststoff zugesetzt wird.

In einer bevorzugten Ausführungsform ist vorgesehen, dass die Verdampfungseinrichtung einen Wärmeübertrager aufweist, durch den das Wärmeträgerfluid leitbar ist. Dadurch kann Wärmeenergie für die Verdampfung des flüssigen Reaktormittels durch das Wärmeträgerfluid bereitgestellt werden oder das Wärmeträgerfluid kann, bevor es in die Wärmeübertragungsvorrichtung gelangt, durch das flüssige Reaktionsmittel vorgewärmt werden, wenn in dem Dampfbehälter zur Druckregulierung eine Kondensation des Reaktionsmittels erfolgt.

Der Dampfbehälter kann auch direkt an dem Reaktorbehälter angebracht bzw. mit diesem thermisch gekoppelt sein, sodass beispielsweise lediglich eine Wandung den Dampfbehälter und den Behälterraum trennt. Die Wandung kann derart ausgebildet sein, dass ein gezielter Wärmestrom aus dem Behälterraum in den Dampfbehälter zugelassen wird, wodurch eine Wärmeübertragung auf das in dem Dampfbehälter angeordnete Reaktionsmittel erfolgt.

Die Heizvorrichtung kann eine elektrische Heizvorrichtung, eine solarbetriebene Heizvorrichtung, oder ein weiterer fluidbetriebener Wärmeübertrager sein. Vorzugsweise ist die Heizvorrichtung eine elektrische Heizvorrichtung, die in einer der Wände des Behälterraums angeordnet ist.

Eine thermische Isolierung kann die Außenwand des Reaktorbehälters bilden. Dabei ist thermische Isolierung außerhalb der Wand der Wärmeübertragungsvorrichtung angeordnet. Durch die thermische Isolierung können Wärmeverluste reduziert oder vermieden werden.

Die Mischeinrichtung kann eine Antriebsvorrichtung aufweisen, die außerhalb des Reaktorbehälters angeordnet ist. Dadurch kann die Antriebsvorrichtung in einem Bereich mit niedriger Temperatur angeordnet werden.

Die Erfindung betrifft ferner ein Verfahren zur thermochemischen Energiespeicherung mittels eines in einem Reaktorbehälter aufgenommenen wirbelfähigen partikelförmigen Feststoffes, der in einer endothermen Reaktion unter Zufuhr von Wärmeenergie von einem ersten Zustand unter Abgabe eines Reaktionsmittels in einen zweiten Zustand überführbar ist und in einer exothermen Reaktion unter Abgabe von Wärmeenergie von dem zweiten Zustand unter Aufnahme des Reaktionsmittels in den ersten Zustand Rücküberführbar ist, in folgenden Schritten:
- Zufuhr von Wärmeenergie zu dem partikelförmigen Feststoff zur Speicherbeladung, wobei der partikelförmige Feststoff verwirbelt wird und wobei das Reaktionsmittel abgegeben und im dampfförmigen Zustand abgeführt wird,
- Zuführen von Reaktionsmittel zu dem partikelförmigen Feststoff zur Speicherentladung, wobei der partikelförmige Feststoff verwirbelt wird und wobei Wärmeenergie abgeführt wird, wobei das Reaktionsmittel im dampfförmigen Zustand bereitgestellt und bei der Speicherentladung dem partikelförmigen Zustand im dampfförmigen Zustand zugeführt wird.

Das erfindungsgemäße Verfahren kann insbesondere mittels der erfindungsgemäßen Speichervorrichtung zur thermochemischen Speicherung von Energie durchgeführt werden.

Mittels des erfindungsgemäßen Verfahrens kann somit bei der thermochemischen Energiespeicherung eine hohe spezifische Leistung erreicht werden, da bei der Speicherentladung im Vergleich zu herkömmlichen Verfahren deutlich höhere Temperaturen erreicht werden können, ohne dass es aufgrund von Verdampfung von Reaktionsmittel zu Problemen mit ungewollten Druckanstiegen kommen kann.

Vorzugsweise ist vorgesehen, dass das bei der Speicherbeladung abgeführtes Reaktionsmittel im dampfförmigen Zustand gespeichert und zur Speicherentladung dem partikelförmigen Feststoff wieder zugeführt wird.

Die Bereitstellung des Reaktionsmittels im dampfförmigen Zustand kann in einem Dampfbehälter erfolgen, wobei in dem Dampfbehälter flüssiges Reaktionsmittel zur Druckregulierung in dem Dampfbehälter und dem Reaktorbehälter verdampft oder dampfförmiges Reaktionsmittel kondensiert wird.

Die Wärmeenergie kann zumindest teilweise durch den partikelförmigen Feststoff bereitgestellt werden, indem die Wärmeenergie von dem Reaktorbehälter auf den Dampfbehälter übertragen wird.

Bei dem erfindungsgemäßen Verfahren und der erfindungsgemäßen Speichervorrichtung kann insbesondere vorgesehen sein, dass der partikelförmige Feststoff Kalk und das Reaktionsmittel Wasserdampf ist.

Im Rahmen der Erfindung wird unter "dampfförmigem Reaktionsmittel" verstanden, dass das Reaktionsmittel unter normalen Umgebungsbedingungen in flüssiger Form vorliegt und für die Zuführung zu dem partikelförmigen Feststoff während der Speicherentladung im dampfförmigen Zustand bereitgehalten oder vorher verdampft wird.

Im Folgenden wird unter Bezugnahme auf die nachfolgende Figur die Erfindung näher erläutert.

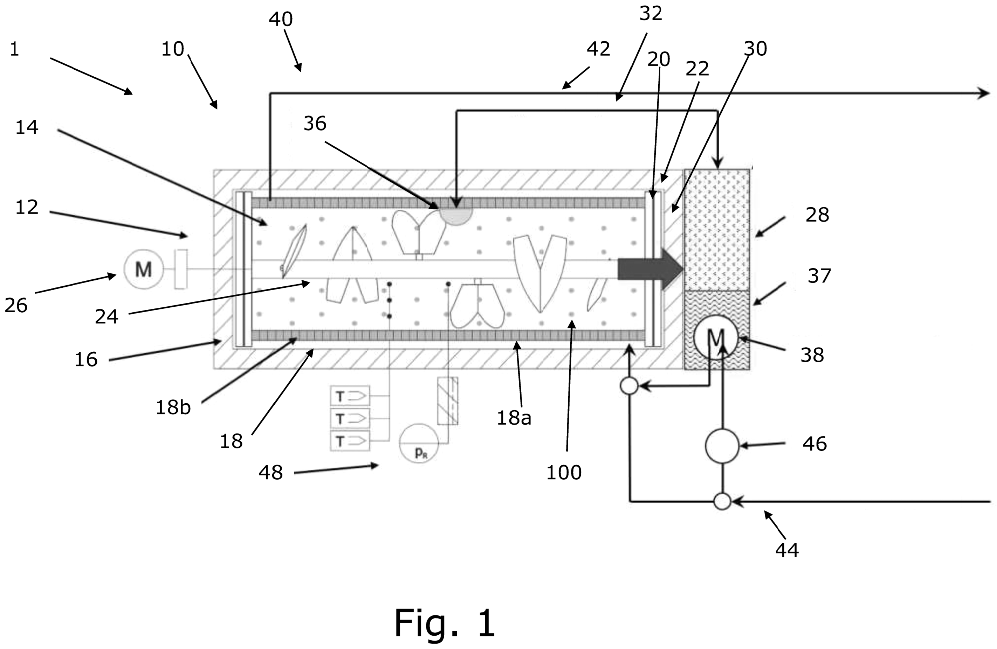

In der einzigen Figur ist eine erfindungsgemäße Speichervorrichtung 1 zur thermochemischen Speicherung von Energie schematisch im Schnitt dargestellt.

Die erfindungsgemäße Speichervorrichtung 1 zur thermochemischen Speicherung von Energie weist eine Reaktorvorrichtung 10 mit einem Reaktorbehälter 12 auf, der einen Behälterraum 14 bildet. Der Behälterraum 14 dient zur Aufnahme eines wirbelfähigen partikelförmigen Feststoffs 100.

Der Reaktorbehälter 12 weist eine Außenwand 16 auf, die eine thermische Isolierung umfasst.

Ferner ist in dem Reaktorbehälter 12 eine Wärmeübertragungsvorrichtung 18 angeordnet, die aus einer Wand 18a besteht. Die Wand 18a umgibt den Behälterraum 14 mantelförmig. In der Wand 18a sind Kanäle 18b angeordnet, durch die ein Wärmeträgerfluid geleitet werden kann, das während der Speicherentladung, bei der ein dampfförmiges Reaktionsmittel in den Behälterraum geleitet wird, erwärmt wird.

In dem Behälterraum 14 ist ferner eine Heizvorrichtung 20 angeordnet, über die während der Speicherbeladung Wärmeenergie dem partikelförmigen Feststoff 100 zuführbar ist. Die Heizvorrichtung 20 kann beispielsweise als eine elektrische Heizspirale ausgebildet sein, die in einer Stirnwand 22 des Behälterraums 14 angeordnet ist.

In dem Behälterraum 14 ist ferner eine Mischeinrichtung 24 angeordnet, über die der partikelförmige Feststoff 100 verwirbelbar ist. Die Mischeinrichtung 24 ist beispielsweise als Pflugscharmischer ausgebildet und weist eine Antriebsvorrichtung 26 auf, die außerhalb des Reaktorbehälters 12 angeordnet ist. Die Verwirbelung des partikelförmige Feststoff 100 erfolgt während der Speicherbeladung bzw. -entladung, so dass der partikelförmige Feststoff 100 beispielsweise an die Stirnwand 22 bzw. an die Wand 18a gelangt und eine vorteilhafte Wärmeübertragung erfolgen kann. Während der Speicherentladung erfolgt durch die Verwirbelung ferner eine gute Vermischung von partikelförmigem Feststoff 100 und dampfförmigem Reaktionsmittel.

An dem Reaktorbehälter 12 ist ferner ein Dampfbehälter 28 angeordnet. Eine den Dampfbehälter 28 und den Reaktorbehälter 12 verbindende Verbindungswand 30 ist dabei derart ausgebildet, dass Wärmeenergie aus dem Reaktorbehälter 12 auf den Dampfbehälter 28 übertragen werden kann, wie in der Figur durch einen Pfeil dargestellt ist. Der Dampfbehälter 28 ist als Druckbehälter ausgebildet und nimmt das dampfförmige Reaktionsmittel auf. Die Zuführvorrichtung 32 verbindet den Dampfbehälter 28 mit dem Reaktorbehälter 12. Die Zuführvorrichtung 32 bildet einen Einlass 34 in den Behälterraum 14 des Reaktorbehälters 12, wobei an dem Einlass 34 eine Filtereinrichtung 36 für den partikelförmigen Feststoff 100 angeordnet ist.

Während der Speicherentladung wird dampfförmiges Reaktionsmittel aus dem Dampfbehälter 28 durch die Zuführvorrichtung in den Behälterraum 14 eingelassen, sodass der partikelförmige Feststoff 100 in einer exothermen Reaktion mit dem dampfförmigen Reaktionsmittel reagieren kann. Die Wärmeenergie wird dann mittels der Wärmeübertragungsvorrichtung 18 abgeführt.

Bei der Speicherbeladung wird der partikelförmige Feststoff 100 mittels der Heizvorrichtung 20 erwärmt. Dabei wird Reaktionsmittel in Dampfform abgegeben und kann über die Zuführvorrichtung 32 in den Dampfbehälter 28 abgeführt werden.

In dem Dampfbehälter 28 kann das Reaktionsmittel in Dampfphase und in Flüssigphase vorliegen. Ferner kann in dem Dampfbehälter 28 eine Verdampfungseinrichtung 37 vorgesehen sein. Die Verdampfungseinrichtung 37 kann einen Wärmeübertrager 38 aufweisen, durch den das Wärmeträgerfluid der Wärmeübertragungsvorrichtung 18 fließt. Beispielsweise kann ein Heizkreislauf 40 vorgesehen sein, in dem die Wärmeübertragungsvorrichtung 18 angeordnet ist. Der Heizkreislauf 40 kann einen Vorlauf 42 und einen Rücklauf 44 aufweisen, die mit der Wärmeübertragungsvorrichtung 18 verbunden sind. Von dem Rücklauf 44 kann ein Massenstrom des Wärmeträgerfluids abgezweigt werden und durch den Wärmeübertrager 38 geleitet werden. Der abgezweigte Massenstrom kann über einen Massenstromregler 46 geregelt werden. Über das Wärmeträgerfluid aus dem Rücklauf 44 kann beispielsweise Wärmeenergie für die Verdampfung des Reaktionsmittels zur Verfügung gestellt werden. Bei der Ausgestaltung des Dampfbehälter 28 als Druckbehälter kann beispielsweise in dem Dampfbehälter 28 ein Druck von 0,4 bar vorgesehen sein, der aufgrund der Verbindung der Zuführvorrichtung 32 mit dem Reaktorbehälter 12 auch in dem Reaktorbehälter 12 vorherrscht. Durch den niedrigen Druck in dem Dampfbehälter 28 kann mittels des Wärmeträgerfluids auch bei niedrigem Temperaturniveau des Wärmeträgerfluids eine Verdampfung des Reaktionsmittels erreicht werden.

Über den Wärmeübertrager 38 der Verdampfungseinrichtung 37 kann eine Druckregulierung in dem Dampfbehälter 28 erfolgen. Dazu kann beispielsweise auch vorgesehen sein, dass das Reaktionsmittel kondensiert, sodass über den Wärmeübertrager 38 das Wärmeträgerfluid des Rücklaufs 44 zum Wärmeabtransport erwärmt wird. Somit kann auch vorgesehen sein, dass mittels des Wärmeübertragers 38 das Wärmeträgerfluid zumindest teilweise vorgewärmt wird, bevor es in die Wärmeübertragungsvorrichtung 18 eingeleitet wird.

Ferner kann die Reaktorvorrichtung noch verschiedene Sensoren 48 aufweisen, die beispielsweise Temperaturen und/oder Druck in dem Behälterraum 14 messen, wobei über die Messwerte die Speichervorrichtung 1 regelbar ist.

Bei der erfindungsgemäßen Speichervorrichtung 1 kann der partikelförmige Feststoff 100 beispielsweise Kalk sein. Als Reaktionsmittel kann beispielsweise Wasserdampf zum Einsatz kommen.

Mittels der erfindungsgemäßen Speichervorrichtung 1 kann in vorteilhafter Weise eine hohe spezifische Wärmeleistung der Reaktorvorrichtung 10 erreicht werden, indem die Speicherentladung auf einem relativ hohen Temperaturniveau von beispielsweise bis zu 520° C erfolgen kann.

Dadurch kann ein hoher Temperaturgradient zwischen dem Rücklauf 44 und der Wärmeübertragungsvorrichtung 18 erreicht werden, sodass eine vergleichsweise geringe Wärmeübertragungsfläche ausreicht, um hohe Wärmeübertragungsraten zu erreichen.

### Bezugszeichenliste

- 1: Speichervorrichtung
- 10: Reaktorvorrichtung
- 12: Reaktorbehälter
- 14: Behälterraum
- 16: Außenwand
- 18: Wärmeübertragungsvorrichtung
- 18a: Wand
- 18b: Kanäle
- 20: Heizvorrichtung
- 22: Stirnwand
- 24: Mischeinrichtung
- 26: Antriebsvorrichtung
- 28: Dampfbehälter
- 30: Verbindungswand
- 32: Zuführvorrichtung
- 34: Einlass
- 36: Filtereinrichtung
- 37: Verdampfungseinrichtung
- 38: Wärmeübertrager
- 40: Heizkreislauf
- 42: Vorlauf
- 44: Rücklauf
- 46: Massenstromregler
- 48: Sensoren
- 100: partikelförmiger Feststoff

## Patentansprüche

1. Speichervorrichtung (1) zur thermochemischen Speicherung von Energie, mit einer Reaktorvorrichtung (10), mit einem Reaktorbehälter (12) mit einem Behälterraum (14) zur Aufnahme eines wirbelfähigen, partikelförmigen Feststoffes (100), mit einer Heizvorrichtung (20) zur Zufuhr von Wärmeenergie zu dem partikelförmigen Feststoff (100) während einer Speicherbeladung, wobei der partikelförmige Feststoff (100) während der Speicherbeladung in einer endothermen Reaktion unter Zufuhr von Wärmeenergie von einem ersten Zustand unter Abgabe eines Reaktionsmittels in einen zweiten Zustand überführbar ist, mit einer Wärmeübertragungsvorrichtung (18) zur Wärmeübertragung während einer Speicherentladung, wobei der partikelförmige Feststoff (100) während der Speicherentladung in einer exothermen Reaktion unter Abgabe von Wärmeenergie von dem zweiten Zustand unter Aufnahme des Reaktionsmittels in den ersten Zustand rücküberführbar ist, und mit einer Mischeinrichtung (24) zur Verwirbelung des partikelförmigen Feststoffes (100),
**gekennzeichnet durch**
einen Dampfbehälter (28) zur Speicherung oder Bereitstellung von Reaktionsmittel im dampfförmigen Zustand und eine Zuführvorrichtung (32) zur Zuführung des dampfförmigen Reaktionsmittels in den Behälterraum (14), die den Dampfbehälter (28) mit dem Reaktorbehälter (12) verbindet.

2. Speichervorrichtung nach Anspruch 1, **dadurch gekennzeichnet, dass** der Dampfbehälter (28) als Druckbehälter ausgebildet ist, .

3. Speichervorrichtung nach Anspruch 1 oder 2, **dadurch gekennzeichnet, dass** der Dampfbehälter (28) eine Verdampfungseinrichtung (37) zur Verdampfung des Reaktionsmittels aufweist.

4. Speichervorrichtung nach einem der Ansprüche 1 bis 3, **dadurch gekennzeichnet**, durch die Wärmeübertragungsvorrichtung (18) durch eine Wand (18a) mit integrierten Kanälen (18b) gebildet ist, durch die ein Wärmeträgerfluid leitbar ist, wobei die Wand (18a) den Behälterraum (14) mantelförmig umgibt.

5. Speichervorrichtung nach einem der Ansprüche 1 bis 4, **dadurch gekennzeichnet, dass** die Zuführvorrichtung (32) einen Einlass (34) in den Behälterraum (14) des Reaktorbehälter (12) bildet, wobei an dem Einlass (34) eine Filtereinrichtung (36) für den partikelförmigen Feststoff (100) angeordnet ist .

6. Speichervorrichtung nach Anspruch 4 oder 5, **dadurch gekennzeichnet, dass** die Verdampfungseinrichtung (37) einen Wärmeübertrager (38) aufweist, durch den das Wärmeträgerfluid leitbar ist.

7. Speichervorrichtung nach einem der Ansprüche 1 bis 6, **dadurch gekennzeichnet, dass** die Heizvorrichtung (20) eine elektrische Heizvorrichtung, ein solarbetrieben Heizvorrichtung oder ein weiterer fluidbetriebener Wärmeübertrager ist.

8. Speichervorrichtung nach einem der Ansprüche 1 bis 7, gekennzeichnet eine thermische Isolierung, die eine Außenwand (16) des Reaktorbehälters (12) bildet.

9. Speichervorrichtung nach einem der Ansprüche 1 bis 8, die Mischeinrichtung eine Antriebsvorrichtung (26) aufweist, die außerhalb des Reaktorbehälters (12) angeordnet ist.

10. Verfahren zur thermochemischen Speicherung von Energie mittels eines in einem Reaktorbehälter (12) aufgenommenen wirbelfähigen partikelförmigen Feststoffes (100), wobei der partikelförmige Feststoff (100) in einer endothermen Reaktion unter Zufuhr von Wärmeenergie von einem ersten Zustand unter Abgabe eines Reaktionsmittels in einen zweiten Zustand überführbar ist und in einer exothermen Reaktion unter Abgabe von Wärmeenergie von dem zweiten Zustand unter Aufnahme des Reaktionsmittels in den ersten Zustand rücküberführbar ist, mit folgenden Schritten:
- Zufuhr von Wärmeenergie zu dem partikelförmigen Feststoff (100) zur Speicherbeladung, wobei der partikelförmige Feststoff (100) verwirbelt wird und wobei das Reaktionsmittel abgeben und im dampfförmigen Zustand abgeführt wird,
- Zuführen von Reaktionsmittel zu dem partikelförmigen Feststoff (100) zur Speicherentladung, wobei der partikelförmige Feststoff (100) verwirbelt wird und wobei Wärmeenergie abgeführt wird,
**dadurch gekennzeichnet, dass**
das Reaktionsmittel im dampfförmigen Zustand bereitgestellt und bei der Speicherentladung dem partikelförmigen Feststoff (100) im dampfförmigen Zustand zugeführt wird.

11. Verfahren nach Anspruch 10, **dadurch gekennzeichnet, dass** das das bei der Speicherbeladung abgeführte Reaktionsmittel im dampfförmigen Zustand gespeichert und zur Speicherentladung dem partikelförmigen Feststoff (100) wieder zugeführt wird.

12. Verfahren nach Anspruch 10 oder 11, **dadurch gekennzeichnet, dass** die Bereitstellung des Reaktionsmittel im dampfförmigen Zustand in eine Dampfbehälter (28) erfolgt, wobei in dem Dampfbehälter (28) flüssiges Reaktionsmittel zur Druckregulierung in dem Dampfbehälter (28) und dem Reaktorbehälter (12) verdampft oder dampfförmiges Reaktionsmittel kondensiert wird.

13. Verfahren nach einem der Ansprüche 10 bis 12, **dadurch gekennzeichnet, dass** der partikelförmige Feststoff (100) Kalk und das Reaktionsmittel Wasserdampf ist.
